# EUROPEAN PATENT APPLICATION

(11) **EP 2 051 355 A2**
(43) Date of publication of application: **22.04.2009**
(21) Application number: 08380289.2
(22) Date of filing: 10.10.2008
(51) Int. Cl.: H02K 53/00

(54) **Magnetic generator and turbine**

(30) Priority: 16.10.2007 ES 200702711 P
(71) Applicant: Universal Descontaminacion, S.L., 41590 La Roda de Andalucia, Sevilla (ES)
(72) Inventor: Pinel Jimenez, Marcos, 41005 Sevilla (ES)
(74) Representative: Carvajal y Urquijo, Isabel

(57) **Abstract**

The invention relates to a magnetic generator of the type formed by a rotor 2 and a stator 3, comprising at least:
a bedplate 1, supporting a rotor 2, centered in the axis of symmetry of the assembly, surrounded by a stator 3 and which is furthermore supported by a plurality of supports 4;
a vacuum capsule 5, circumscribing the assembly formed by the rotor 2 and the stator 3;
wherein the generator transmission 6 extends from the rotor 2 and is centered in it.

## Description

### Object of the Invention

The object of the magnetic generator described in this specification is the generation of mechanical and electric energy, having the attractive and repulsive forces of magnetic fields as a basis.

### Background of the Invention

The main source of energy which is currently used is petroleum and its derivatives. Nevertheless, this raw material, like others such as coal, will disappear in a more or less limited space of time.

The problems caused by this type of energy is well known, especially the emission of CO₂ to the atmosphere and which is currently attempted to be reduced by means of international treaties, such that signed in the Japanese city of Kyoto.

Independently of the power generation with fossil fuels, the use of other types of energies, such as renewable energies and atomic energy is frequent.

Despite the safety progress of power stations, atomic energy is extremely dangerous in the event of an accident. Furthermore, the elimination of the waste produced in these plants is impossible with the currently available means, this radioactive waste being stored in the subsoil, waiting for its radioactive activity to cease, a task which can be carried out in thousands of years.

Renewable energies currently do not cover the needs of our advanced industrial societies, most of them being in a state of development which could be described as embryonic.

The research for new energy sources combining energy efficiency and a scrupulous environmental friendliness is an urgent need.

### Description of the Invention.

The magnetic generator and turbine object of the present invention patent application is set forth to palliate or, where appropriate, eliminate the aforementioned problems.

The generator comprises a rotor and a stator with a plurality of permanent magnets, those located in the stator being variable in all directions and both assemblies of magnets having a spiral curvilinear shape. Both assemblies of magnets have their pole areas either towards the end or towards the inside of the machine.

The magnets of the stator have one of their ends close to the rotor, wherein said end does not correspond with one of their poles. On the contrary, the other end of the magnets of the stator is far from the rotor. The magnets of the rotor are configured in the form of a fixed diaphragm on a central circle.

The relative position of the magnets of the stator is such that the beginnings of each of them conceal the center of the pole of the magnet before it.

The magnets with the form of a turbine located in the rotor have the end oriented outwardly and the other end oriented inwardly, either their pole centers or their geometric centers concealing one another. Being supported on the effects of the magnetic fields of the magnets which with opposite polarities attract one another and those with the same polarity repel one another.

Due to the described position, wherein the geometric centers are covered by a magnet and the latter is in turn covering another magnet and so on, the magnets will constantly attract and repel one another, without finding the equilibrium point, a constant movement in the rotor occurring.

Thus, there will be three points of operation: when the magnets attract one another, when the magnets repel one another and when none of the two things occurs.

At the time of the attraction, the placement or position of the magnets of the stator with respect to those of the rotor must be such that they are attracted to the center of the magnetic poles of the opposite sign. In fact, the rotor is attracted towards the centers of the magnets of the stator, but it will not be able to reach them given that the centers of the poles are at another end, and furthermore concealed by another magnet which in turn will drive it in its attempt to find that equilibrium point, a constant movement occurring.

At the time of the repulsion, a movement similar to that described, but in the opposite direction, occurs. In this first case, it would rotate in a clockwise direction and in the repulsion case it would rotate in the opposite direction.

The rotor has a second plurality of magnets, in the same form as those already described, but with their polarities opposite to the previous ones and located more internally with respect to them, such that if the more externally located magnets of the stator attract the magnets of the rotor, the internal magnets of the stator repel them, both forces forming a powerful torque on the rotor which will make it rotate.

With the arrangement thus described, both the start and the stop of the rotor are carried out extremely easily, actuating to that end the magnets of the stator, with hydraulic and/or electronic means.

The rotation of the rotor which can be well applied for the generation of electric, mechanical, automotive energy, among others. Another advantage derived from the configuration is that upon rotating the rotor, the magnets of the stator undergo flow variations useful for being used as an electric energy-producing source. This energy thus achieved will be by the induction of the magnets of the stator.

### Brief Description of the Drawings

A series of drawings is very briefly described below which aid to better understand the invention and which are expressly related to an embodiment of said invention which is set forth as a non-limiting example thereof.
Figure 1 shows a schematic view of the magnetic generator and turbine assembly, object of the present invention patent.
Figure 2 shows a schematic view of the rotor and the situation of the magnetic blades of the magnetic generator and turbine assembly, object of the present invention patent.
Figure 3 shows a schematic view of the stator of the magnetic generator and turbine assembly, object of the present invention patent.
Figure 4 shows a schematic view of the start and stop of the magnetic generator and turbine, object of the present invention patent.

### Preferred Embodiment of the Invention.

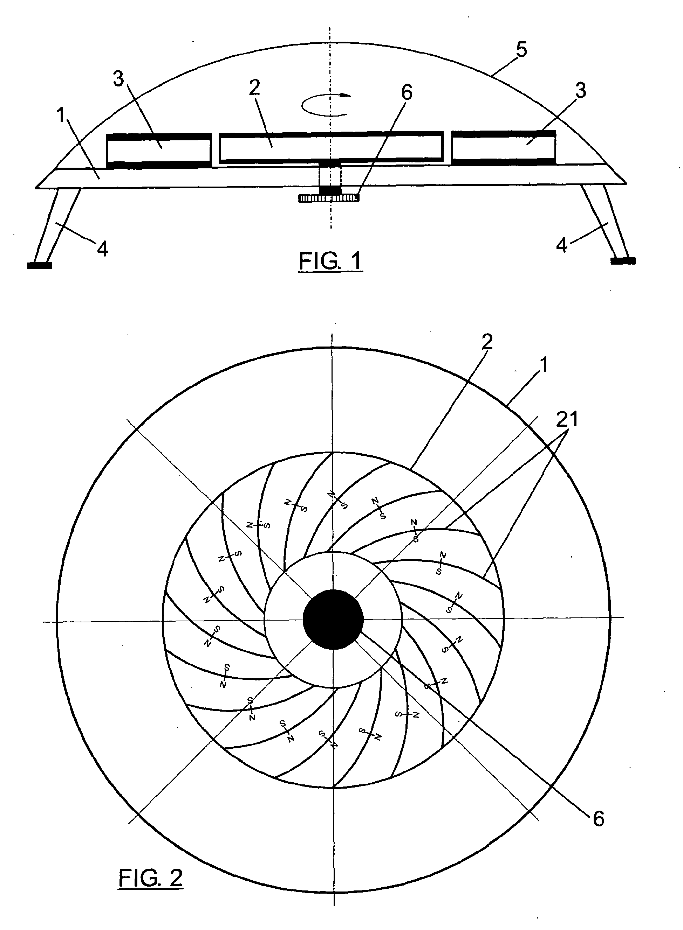

As can be observed in Figure 1, the magnetic generator and turbine, object of the invention comprises at least:
a bedplate 1, supporting a rotor 2, centered in the axis of symmetry of the assembly, surrounded by a stator 3 and which is furthermore supported by a plurality of supports 4;
a vacuum capsule 5, circumscribing the assembly formed by the rotor 2 and the stator 3;
wherein the generator transmission 6 extends from the rotor 2 and is centered in it.

Figure 2 schematically shows a representation of the rotor 2, comprising a plurality of radially arranged and curved magnets 21. Said magnets 21 have a first end oriented outwardly and a second end oriented inwardly, either their pole centers or their geometric centers concealing one another.

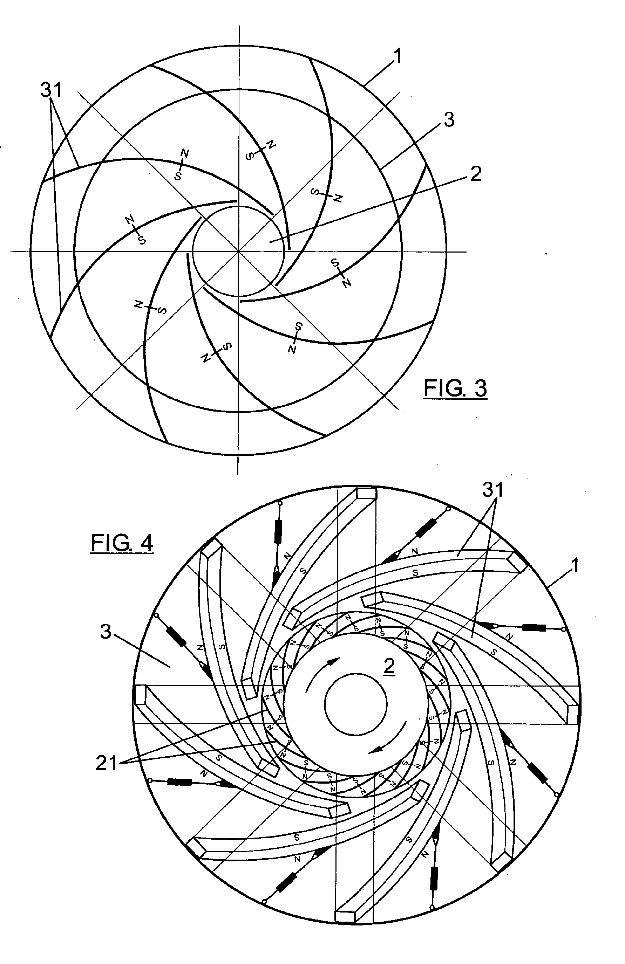

Figure 3 schematically shows a representation of the stator 3, comprising a plurality of radially arranged and curved magnets 31. The magnets 31 of the stator 3 have one of their ends close to the rotor 2, wherein said end does not correspond with one of their poles. On the contrary, the other end of the magnets 31 of the stator 3 is far from the rotor 2. The relative position of the magnets 31 of the stator 3 is such that the beginnings of each of them conceal the center of the pole of the magnet 31 immediately before it.

The magnets 21 of the rotor 2 and the magnets 31 of the stator 3 have their polarities opposite to one another, the magnets 21 furthermore being located more internally with respect to the magnets 31, such that if the more externally located magnets 31 of the stator 3 attract the magnets 21 of the rotor 2, the internal magnets 31 of the stator 3 repel them, both forces forming a powerful torque on the rotor 2 which will make it rotate, as shown in Figure 4.

## Claims

1. A magnetic generator of the type formed by a rotor 2 and a stator 3, **characterized in that** it comprises at least:
a bedplate 1, supporting a rotor 2, centered in the axis of symmetry of the assembly, surrounded by a stator 3 and which is furthermore supported by a plurality of supports 4;
a vacuum capsule 5, circumscribing the assembly formed by the rotor 2 and the stator 3;
wherein the generator transmission 6 extends from the rotor 2 and is centered in it.

2. The magnetic generator according to claim 1, **characterized in that** the rotor 2 comprises a plurality of radially arranged and curved magnets 21, wherein said magnets 21 have a first end oriented outwardly and a second end oriented inwardly.

3. The magnetic generator according to claim 1, **characterized in that** the stator 3 comprises a plurality of radially arranged and curved magnets 31, wherein the magnets 31 of the stator 3 have a first end close to the rotor 2, and a second end far from the rotor 2; and wherein the relative position of the magnets 31 of the stator 3 is such that each of them conceals the center of the pole of the magnet 31 immediately before it.

4. The magnetic generator according to claim 1, **characterized in that** the magnets 21 of the rotor 2 and the magnets 31 of the stator 3 have their polarities opposite to one another, the magnets 21 furthermore being located more internally with respect to the magnets 31, such that if the more externally located magnets 31 of the stator 3 attract the magnets 21 of the rotor 2, the internal magnets 31 of the stator 3 repel them, both forces forming a turning torque on the rotor 2.
